# EUROPEAN PATENT SPECIFICATION

(11) **EP 3 771 810 B1**
(45) Date of publication and mention of the grant of the patent: **11.06.2025**
(21) Application number: 20187748.7
(22) Date of filing: 24.07.2020
(51) Int. Cl.: F01N 3/00

(54) **EXHAUST GAS TREATMENT SYSTEM**
ABGASBEHANDLUNGSSYSTEM
SYSTÈME DE TRAITEMENT DES GAZ D'ÉCHAPPEMENT

(30) Priority: 29.07.2019 IT 201900013215
(43) Date of publication of application: 03.02.2021
(73) Proprietor: FPT Industrial S.p.A., 10156 Torino (IT)
(72) Inventor: CERCIELLO, Giovanni, 10141 Torino (IT); AIMAR, Bruno, 12040 MARGARITA (CN) (IT)
(74) Representative: Studio Torta S.p.A.

(56) References cited:
- WO-A1-2014/020063
- AECC: "GASOLINE PARTICULATE FILTER (GPF) How can the GPF cut emissions of ultrafine particles from gasoline engines?", 1 November 2007 (2007-11-01), XP055655807, Retrieved from the Internet <URL:https://www.aecc.eu/wp-content/uploads/2017/11/2017-AECC-technical-summary-on-GPF-final.pdf> [retrieved on 20200108]

## Description

### Field of the invention

The present invention refers to the field of exhaust gas treatment lines (ATS: After Treatment Systems) of the type based on PM-CAT filters, also known as POC (Particulate Oxidation Catalyst), PM-Kat or Flow-through filters (FTF) or Open particulate filters or Partial flow filter (PFF) or Partial filter technology (PFT) or PM oxidation catalyst or PM filter catalyst.

### Description of the prior art

Off-road vehicles usually use PM-CAT filters in order to capture the carbonaceous particulate matter.

Such PM-CAT filters, unlike the DPF filters (Diesel particulate filter), are open-filters, in the sense that the alveoli made in the body of the filter are open and allow the passage of the gases in any saturation condition of the filter itself. The particulate matter is actually filtered by centrifugation, which causes the particulate matter to collide with and to settle within the porous walls of the alveoli, where it gets trapped.

A good survey on the PM-CAT filter is given on "Particle Oxidation Catalysts", W Addy Majewski, found on www.DieselNet.com, revision 2011.02b.

An example of commercial name of a PM-CAT device is PM-Metalit ^{™} of Emitec.

It comprises alternating layers of corrugated metal foil and porous sintered metal fleece. The corrugated foil is formed to direct the gas flow so it impinges onto the metal fleece.

The internal surfaces of the PM-Cat do not have catalyst coatings.

The filtering power or efficiency of PM-CAT filters is between 50% and 90%, and they are able to collect the particulate matter until the alveoli are full. When the alveoli are full, the exhaust gas can anyway flow through the filter, without being treated.

Generally, both the PM-CAT and the DPF filters are coupled with a DOC (Diesel Oxidation Catalyst), which is arranged upstream of the respective filter and promotes the production of NO₂, in order to facilitate a natural reaction of the first type, namely promoting the reaction of the carbonaceous soot with the NO₂ in order to generate CO/CO2 according to the reaction

C + NO₂ -> NO + CO/CO₂

Such reaction is said to occur naturally or passively when the filter reaches an interval of temperatures comprised between 220°C and 450°C approximately. This depends on the operating conditions of the internal combustion engine. Thus such regeneration is called low temperature passive regeneration of the first type.

A high temperature passive or natural regeneration is also known, and occurs when the filter reaches temperatures exceeding 550°C. Such natural regeneration of the second type is very rare.

PM-CAT filters may be provided as part of the original equipment or they can be bought aftermarket and installed on the vehicle, since such devices do not affect the management devices of the internal combustion engine.

DPF filters are closed filters, they completely filter the exhaust gases and they tend to clog due to the saturation of particulate matter, in spite of the presence of such passive regeneration process.

Thus, high temperature active regeneration cycles, with temperatures from 560°C and an average value of 650°C, are commanded and managed by a control unit, in order to promote a reaction of the second type, this time being active, namely generating CO/CO₂ from the reaction of the accumulated carbonaceous soot with the oxygen O₂, thus freeing the DPF filter and allowing the engine apparatus/exhaust line (ATS) to restore its original performance.

The regeneration procedures are also known in the field of the open-filters, by way of example from DE102008058418.

A good survey on DOC is "Diesel Oxidation Catalyst", W. Addy Majewski found on www.DieselNet.com, revision 2012.02a.

The gas temperature at the inlet of the DOC is usually held about at 400-450°C. Then due to the presence of HC, exothermal reactions are carried out within the DOC, so as the temperature at the outlet of the DOC increases by reaching said regeneration temperatures 560° - 650°C necessary for the filter following (downstream) the DOC.

The typical reaction of the second type, both active or passive is the following:

C + O₂ -> CO/CO₂

DPF filters cannot be installed aftermarket on vehicles that are not equipped with them originally, since they cannot manage the active regeneration cycles.

Type-approval cycles performed by type-approval Authorities include the test of the functioning of the internal combustion engine according to predefined engine speed/power/time curves.

When the quantity of particulate matter released in the environment, and of the other pollutants being subject to regulations, is lower than an acceptance threshold, the engine apparatus/exhaust line passes the type approval tests.

Type approval cycles and emission limits change according to the type of vehicle. The actual operating conditions of the vehicle may be very different from the type approval cycles conditions. In certain circumstances, the vehicles originally equipped with PM-CAT filters may be used in a way different from the type-approval curves, thus the filters can be completely saturated and the particulate matter produced by the internal combustion engine will be almost totally released in the environment.

Another problem that may occur is called "blow off", wherein at certain temperatures and with some very high levels of filter saturation, high flow rates of exhaust gases may carry away the soot on the walls of the alveoli, releasing it in the environment.

Furthermore, after an excessive accumulation of soot, it may happen that the engine is brought to heat the PM-CAT filter up to promote an uncontrolled reaction of the second type, reaching and exceeding 900°C and provoking irreversible damages to the filter. A case is known when the vehicle itself took fire provoking serious damages to itself and to the surrounding environment, affecting a vast geographical area.

According to the prior art, in order to overcome such drawbacks, diagnosis systems detecting the saturation level of the PM-CAT filters are adopted. An example of such systems is given in WO2012082268.

Besides, from WO2014020063 A1, filed in the name of the same applicant, and corresponding to the preamble of the independent claims, an estimation method is known to estimate the amount of particulate matter accumulated in the PM-CAT filter. According to such method, an amount of particulate matter in the exhaust gases produced by the internal combustion engine is estimated on the basis of a model. Such amount is afterwards weighed by a coefficient that is indicative of the filtering efficiency of the PM-CAT filter.

In addition, from the publication "Gasoline Particulate Filter (GPF)" from AECC (Association for Emissions Control by Catalyst), dated November 2017, it is known that the filtration efficiency of the GPF varies depending on the drive cycle.

### Summary of the invention

Therefore, an aim of the present invention is to improve the above mentioned method, so as to obtain precise results in the estimation of the amount of particulate matter accumulated in the PM-CAT filter, so as to improve the control of the regeneration of such filter.

In this way, the PM-CAT filters can have a longer life and be more efficient, safe, and even suitable to very low-power work cycles.

This and further aims are reached by means of an exhaust gas treatment system (ATS) according to claim 1, a control method according to claim 7, an internal combustion engine according to claim 15 and a vehicle according to claim 16.

Further details and characteristics of the invention will be described below, also with the help of the claims which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
- figure 1 schematically shows a catalyst-filter system according to the present invention,
- figure 2 schematically shows an ATS system according to the present invention, which integrates the catalyst-filter system shown in figure 1,
- figure 3 is a block diagram about a preferred embodiment of an estimation provided in the control method of the present invention; and
- figure 4 is an example of a table or map implemented in the estimation of figure 3.

In the figures, the same reference numbers and letters identify the same elements or components.

### Detailed description of preferred embodiments of the invention

The system that is object of the present invention provides for the active regeneration of PM-CAT filters similarly to what happens for DPF filters. The active regeneration may be a process per se known, which includes, for example, the post-injection of additional fuel during some specific strokes of the engine, so that the fuel burns in the exhaust gas treatment system (in particular within the DOC) rather than in the cylinders, promoting an active reaction of the second type, namely the oxidation of the carbon residues by means of oxygen.

In the following, the expression "to induce an active regeneration" will mean to increase the temperature of the ATS by enriching the fuel/air ratio and by fuel post-injection techniques or the like, namely independently of the work point and of the work conditions of the internal combustion engine.

In general, the enrichment of the fuel/air ratio is used to manage the DOC inlet temperature, while the post-injections to manage the further temperature increasing within the DOC, exploited into the particulate filter.

In the following the expression "filter unable to retain all the particulate matter" will refer to any open particulate filter different from DPF.

The reasons of such discrimination towards the PM-CAT filters are described in detail below.

The regeneration temperature of any filter depends also on the amount of particulate matter accumulated in the filter. Thus, the application on PM-CAT filters of the same regeneration techniques as DPF filters for the same filter saturation percentage will cause an excessive increase of the temperatures reached during the regeneration process, which would damage the PM-CAT filters.

According to an aspect of the present invention, the start and/or management of the regeneration of the PM-CAT filter is performed on the basis of an estimation of the accumulated particulate matter in the filter and/or a predictive estimation of the saturation level of the filter. Such accumulated particulate matter is also called as "soot load".

Advantageously, a predictive estimation of the accumulation of particulate matter avoids to reach particulate levels that may bring to an uncontrollable second type regeneration, both passive and active.

The estimator of the saturation level or accumulation level of the filter is preferably based on:
- a first model of the grade of smoke of the internal combustion engine, in order to estimate a first amount/rate of particulate matter produced by the internal combustion engine as a function of the operating conditions of the engine itself, such model can be obtained experimentally,
- a second model on the promotion of the first type reaction, in order to estimate a second amount/rate of particulate naturally converted into CO/CO₂, namely by a natural or passive reaction based on the reduction of NO₂ in NO, preferably within an interval of temperatures comprised between 220°C and 450°C;
- a third model on the promotion of the second type reaction, in order to estimate a further amount/rate of particulate naturally converted into CO/CO₂, namely by a natural or passive reaction based on the reduction of O₂ during the functioning of the internal combustion engine, which brings the ATS within an interval of temperatures comprised between 550°C and 650°C.

It is clear that the first amount/rate of particulate matter gives an additional contribution, indicative of the particulate matter that could be settling into the alveoli of the PM-CAT filter, while the other two amounts/rates give a contribution that has to be subtracted in order to estimate which is the actual soot load (i.e. the actual accumulated particulate matter) in the filter.

In general, the first amount/rate is higher than the absolute value of the sum of the other two, especially when the engine operates in low power conditions, namely when the exhaust line does not reach a temperature that is high enough to allow a natural reaction of the first type. For such reason, an aspect of the present invention relates to applying the active regeneration to the PM-CAT filter.

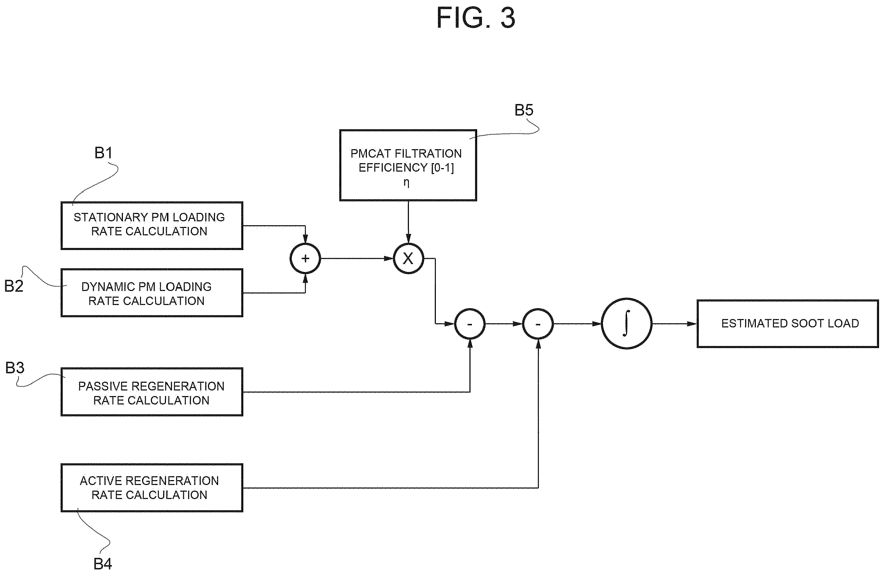

In particular, as shown in figure 3, the first model comprises two calculation blocks B1 and B2, for the estimation of the first amount/rate, respectively in stationary operating conditions and in dynamic operating conditions of the internal combustion engine. In particular, the calculation blocks B1 and B2 are configured to calculate the loading rate of the particulate matter produced by the engine, respectively in stationary and dynamic operating conditions. More in particular, the calculation block B1 operates on the basis of inputs that are indicative of the following quantities: engine speed, fuel consumption, coolant temperature, air temperature, environmental pressure; and the calculation block B2 operates on the basis of inputs that are indicative of the following quantities: engine speed derivative and fuel consumption derivative.

As shown in the diagram of figure 3, the results estimated by the calculation blocks B1 and B2 are added to each other to obtain the above mentioned first amount/rate of particulate matter.

As far as the second and third model are concerned, the diagram in figure 3 shows a single calculation block B3, for sake of simplicity, estimating the whole amount/rate of particulate matter that is passively regenerated in the filter. In particular, the calculation block B3 is configured to calculate the rate of the particulate matter passively regenerated and therefore eliminated from the filter. More in particular, the calculation block B3 operates on the basis of inputs that are indicative of the following quantities: inlet DOC temperature, inlet PM-Cat temperature, exhaust gas flow rate, estimated soot load (e.g. the output of the estimation shown in the block diagram of figure 3 according to a preferred embodiment of the present invention), estimated NOx flow rate, engine speed, fuel consumption.

In addition, figure 3 shows that a calculation block B4 is provided to estimate which is the amount/rate of particulate matter that is regenerated by means of an active regeneration, when an active regeneration process is started. It is clear that this estimated amount/rate gives a contribution that has to be subtracted in order to estimate which is the actual soot load (i.e. the actual particulate matter) in the filter. In particular, the calculation block B4 is configured to calculate the rate of the particulate matter actively regenerated and therefore eliminated from the filter. More in particular, the calculation block B4 operates on the basis of inputs that are indicative of the following quantities: inlet PM-Cat temperature, measured oxygen flow rate, estimated soot load (e.g. the output of the estimation shown in the block diagram of figure 3 according to a preferred embodiment of the present invention). According to laboratory tests on specific intervals of temperature, (220 - 450°C), PM-CAT filters have proven to be more efficient than DPF filters in the promotion of first type reactions having a coefficient comprised between 1.6 and 2.

Thus, according to a particular embodiment, the predictive estimation, in the second model, i.e. in the calculation block B3, is modified in order to take into account the higher efficiency of the PM-CAT filters with respect to the DPF filters in promoting the reaction of the first type. Thus, said second amount/rate, with respect to a DPF filter, is multiplied by a coefficient comprised between 1.6 and 2. Such coefficient represents a ratio between the efficiency of the PM-CAT filter and of the DPF filter in promoting the natural regeneration of the first type.

Since, in the field of passive regenerations, the reaction of the first type is predominant, the higher efficiency of the PM-CAT filter in promoting the reactions of the first type has to be taken into account and implies a reduction of the aforementioned estimation of the regeneration frequency.

In general, PM-CAT filters filtrate only 50% - 90% of the particulate produced by the internal combustion engine. Thus, according to an aspect the present invention, the results obtained by the first model (calculation blocks B1 and B2, in figure 3), which depend only on the characteristics of the internal combustion engine, are weighed with a coefficient η comprised between 0 and 1 (typically between 0.5 and 0.9), namely equal to the actual filtration/capture/retention efficiency of the particulate filter.

After having understood the aforementioned aspects by means of tests, it has been possible to advantageously consider the use of PM-CAT filters in combination with the active regeneration processes.

According to the present invention, such coefficient η is considered to be a value that is variable in time, instant by instant, as a function of the actual operating conditions of the internal combustion engine. Such operating conditions comprise variable input values of a first parameter, indicative of an actual rotation speed of the internal combustion engine and variable input values of a second parameter, indicative of an actual drive torque or an actual power of the internal combustion engine.

Thanks to this improvement, the estimation has revealed to be more precise, in order to efficiently start and/or control the active regeneration processes.

In particular, figure 3 shows a determination block B5 configured to determine which is the instantaneous value (e.g. the value at each instant of time) of the coefficient η (between 0 and 1) for the outstanding operating conditions of the engine, so as to multiply such instantaneous value to the sum of the outputs of the calculation blocks B1 and B2.

The determination block B5 operates on the basis of inputs, that are variable in time and indicate the actual operating conditions of the internal combustion engine. The determination block B5 includes at least one relation that is stored in a memory and correlates such inputs with the values of the coefficient η.

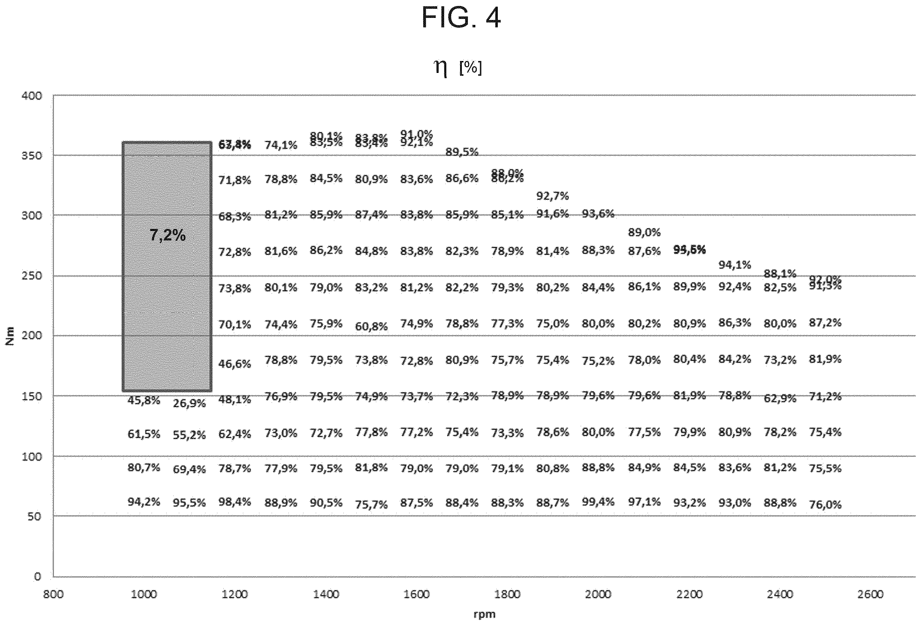

Figure 4 shows one exemplary and non-limitative embodiment of such relation, which is defined by a table or map, or a diagram, in which the operating conditions of the engine are defined by the combination of a first and a second parameter which are indicative respectively of the engine speed and of the engine drive torque or engine power. In particular, the values of such parameters are respectively along two orthogonal axes as the abscissa and the ordinate of this map or diagram. Preferably, the first parameter is defined by the engine speed (e.g. in revolutions per minute) and the second parameter is defined by the engine drive torque (e.g. in Newton meter).

The values of the inputs defined by the actual speed and torque of the engine are generally available in the ECU during operation, in response to appropriate measurements of sensors detecting, instant by instant, the engine operating conditions.

According to variants that are not shown, in combination or as an alternative to the speed and torque values of the engine during operation, the determination block B5 can be configured to determine the instantaneous values of the coefficient η in response to other variable inputs, such as the exhaust gas flow rate (which is also indicative of the engine speed), the exhaust gas temperature (which is also indicative of the engine drive torque), the fuel consumption. According to variants that are not shown, the above mentioned relation is defined by a curve, instead of a map or table.

The map or diagram shown in figure 4 as exemplary embodiment includes a plurality of values for the coefficient η, each correlated to a corresponding couple of input values, one for the first parameter and the other for the second parameter. Therefore, the abscissa and ordinate axes of the map or diagram are defined by a plurality of discrete values of the first and second parameter (e.g. at a constant and regular pitch).

This relation is built up during the design phase, by testing an assembly defined by the combination of an engine and an ATS, in a plurality of different operating conditions, so as to determine which is the actual efficiency of the PM-Cat (i.e. which is the value of the coefficient η) for each of the tested operating conditions.

In particular, to obtain each efficiency value, a measured rate of soot downstream of the PM-Cat filter is subtracted from a measured rate of soot upstream of such filter.

The results of these calibration tests are then summarized in a map or diagram, or a different kind of relation, which is stored and used for all marketed assemblies having the same combination of engine and ATS that have been tested.

When the map or diagram is built up on the basis of the measurements carried out during the calibration tests, the coefficient values obtained from these calibration tests can be filtered or modified before being set in the map or diagram. By way of example, at a relatively low speeds and relatively high torques, the values obtained from the tests could result to be even negative, because the PM-Cat filter is not efficient in this kind of operating conditions. In other words, with this phenomenon, also called as "blow-through", the exhaust gas passes through the PM-cat without any filtration effect, likely because the gas speed is not enough high to experience a flow deflection and impingements on the porous walls provided in the filter. In this operating conditions, a constant common value can be set for a certain range of the first parameter values and/or for a certain range of the second parameter values.

Preferably, the determination block B5 also comprises an approximation and/or interpolation process (not described in detail, as it can be chosen among the ones already known in mathematics matters) if the actual input values, obtained by means of the sensor measurements instant by instant, do not correspond exactly to the discrete values provided along the abscissa and ordinate axes of the map or diagram, so as to calculate the instantaneous value of the coefficient η to be used in weighing the first amount/rate of the particulate matter.

Indeed, once the instantaneous value of the coefficient η has been determined, it is multiplied to the sum of the outputs from the calculation blocks B1 and B2, as already mentioned above, so as to weigh the first amount/rate of the particulate matter and therefore obtain a weighed third amount/rate.

Afterwards, the output of the calculation block B3 and the output of the calculation block B4 (if an active regeneration is provided) are subtracted from this weighed third amount/rate.

Finally, the result of this subtraction is integrated (e.g. along time) so as to obtain the estimation about the accumulated particulate matter in the filter.

Furthermore, a setting of the fuel supply system of the engine has been performed. Thus the maps for injection/grade of smoke were improved. Such operation is known as useless in the field of DPF filters, since they filtrate 100% of the particulate matter. Such operation can be performed on any engine, obtaining a reduction of about 40% - 60% of the particulate matter produced by the engine.

According to a preferred embodiment, in order to avoid that the temperatures reached in the PM-CAT filter may become too high, due to the fuel post-injection, a first temperature sensor T1 is provided between the DOC and the PM-CAT. In this way the temperature is constantly monitored in order to avoid that it exceeds 650°C, which usually happens during the regeneration of the DPF filters.

During the experimentation further problems have arisen.

During the procedures of regeneration, PM-CAT filters, unlike DPF filters, allow the passage of unburnt hydrocarbons, since the PM-CAT filter does not have any superficial treatment with noble metals (platinum, palladium, etc.) that can remove/convert the HC.

According to an embodiment, such problem has been solved by increasing the temperature at the inlet of the DOC to a minimum value of 500°C and to an optimal value of 550°C. To that end, in order to control the process in an adequate way, the second temperature sensor T2 arranged upstream of the DOC and the first temperature sensor T1 arranged between the DOC and the PM-CAT allow to monitor in detail the regeneration process.

According to an embodiment, such optimal interval of temperatures is reached by enriching the mixture, namely by lowering the lambda which represents the ratio between air and fuel.

The temperature control strategy just upstream the PM-CAT, namely by means of T1, allows to ensure a temperature of about 600 +/-50°C in the PM-CAT, which is lower than the regeneration temperature of the DPF.

The control of temperature at the filter, namely at the outlet of the DOC, can be controlled through the post injections suitable to carry out the exothermal reaction within the DOC needed for increasing of 50-100°C the temperature of the gas flow through the filter.

It is clear that the temperature difference between the inlet and the outlet of the DOC is at least 50°C lower than in the DOC of the know systems.

It is possible to estimate the temperatures reached in the PM-CAT filter in a predictive way, as a function of the particulate matter accumulated in the PM-CAT filter and of an amount of post-injected fuel. The sensors mentioned above, T1, T2, allow to give a feedback to the control, optimizing and stabilizing the process.

As it is known, the lambda varies in relation to the power/torque required to the engine, but the enriching that is necessary to promote the reaction, preferably of the second type, since it is more rapid, combined with the normal decrease of the lambda may result as intolerable, since the remarkable grade of smoke of the engine, above all when the power requests exceed 40% of the maximum power, induces the system to release particulate matter beyond the admissible limits. This happens because the PM-CAT filter is an open-filter.

Although it is very difficult that such phenomenon occurs during a type-approval cycle, such problem has been considered.

According to an alternative embodiment, during the regeneration of the PM-CAT filter, maps of fuel supply/grade of smoke, different from the ones of the normal operating conditions of the vehicle, have been used in order to give a lower limit to lambda corresponding to values between 1.5 and 1.1.

According to another alternative embodiment, during the regeneration process of the PM-CAT filter, the fuel supply map is unchanged until a remarkable torque/power is required, namely exceeding a pre-set threshold, for example 50% of the maximum power. Beyond such threshold, a device limiting the enrichment intervenes, namely a limiting device which avoids that the lambda goes below the aforementioned values.

In relation to the latter alternative embodiment, the enrichment curve is smoothed, according to any law, for example in the lambda interval between 1.5 and 1.1, wherein the lower limit, 1.1, cannot be passed. A filter-saturator, for example, may be used in order to avoid the enrichments to exceed 1.1 - intended as a lower limit - and possibly to level/smooth the progression of the enrichment in the interval between 1.5 and 1.1, wherein 1.1 is the lower limit.

These alternative embodiments have in common the use of limiting means which act in proportion to the torque/power request to the internal combustion engine, both modifying the maps in real time and commuting to further pre-stored maps.

In this case the meaning of "filter", for the limiting means, is attributed to a logical function commonly used to program the engine control units through control schemes. An example of limiting means is given for example on US20040084015.

The intervals of intervention of the limiting means may be varied according to the characteristics of the engine, to the presence of the supercharging, etc..

An interval of intervention of the limiting device around lambda=1.3, with a range for example of +/-0.2, can be considered as reasonable.

Thus the maximum effect of the enrichment of the mixture in order to heat the catalyst DOC occurs when a low torque/power is required, while such effect is reduced as the required power increases, namely as a function proportional to the delivered torque/power.

Thus it is possible to regenerate a filter unable to retain all the particulate matter, namely an open-filter, unlike the DPF, and it is possible to ensure a reasonable functionality of the engine, without releasing too much pollutants in the environment.

The solutions shown so far can be applied not only in the field of the PM-CAT filters, but also in the field of the regeneration of any particulate filter that is unable to remove/burn all the unburnt hydrocarbons and to retain all the particulate matter during the regeneration of the filter itself.

Thanks to the present invention, a PM-CAT filter can be used as an alternative to a DPF filter in the field of the DPF filter usage.

In particular, if the present invention is used in the field of the off-road vehicles, the service life of the PM-CAT filter can be extended extraordinarily and the use of the vehicle can be also very different from the usage curves of the type-approval cycles. An optimal behaviour of the system can be guaranteed regardless of its usage.

The present invention, with particular reference to the management of the fuel supply of the engine connected to the filter regeneration, may be implemented by a specific electronic hardware communicating with the control unit ECU, or such management can be carried out by the control unit ECU itself, appropriately programmed. The same is true for the estimator of the accumulation level or saturation level of the filter, for the system for controlling and monitoring the temperature of the DOC, and for the limiting device of the mixture enrichment.

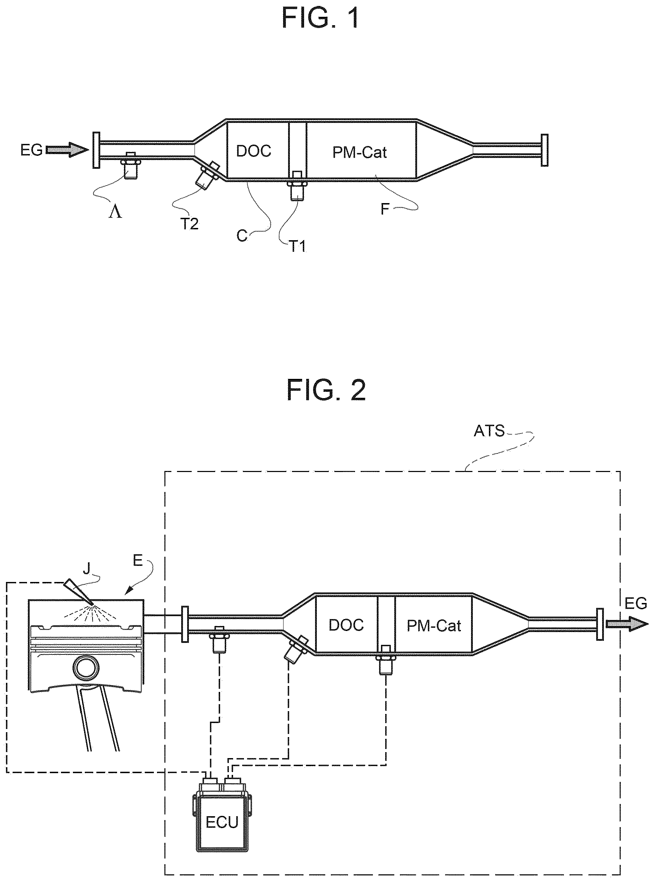

Figure 1 shows a schematic view of a portion of the ATS system that is object of the present invention, comprising a catalyst C and a particulate open-filter F, with a first temperature sensor placed between the catalyst and the filter.

A second temperature sensor T2 is placed upstream of the catalyst C and a lambda sensor (λ) is placed upstream the second temperature sensor T2.

Figure 2 shows an overall schematic view of the ATS system interacting with an internal combustion engine E. The estimator is integrated in the ECU, which is connected to the aforementioned sensors T1, T2, λ and which controls the injection and the post-injection of the fuel by means of the injectors J in the cylinder chambers of the internal combustion engine E.

From the description set forth above it will be possible for the person skilled in the art to embody the invention with no need of describing further construction details. The elements and the characteristics described in the different preferred embodiments may be combined between each other.

The present invention may advantageously be realized by means of a computer program, which comprises program code means performing the steps of the control method, when said program is run on a computer unit (e.g. in the ECU). For this reason the scope of the present patent is meant to cover also said computer program and the computer-readable means that comprise the recorded program.

## Claims

1. Exhaust gas treatment system (ATS) for an internal combustion engine (E), the system (ATS) comprising:
- a particulate open-filter (F),
- a Diesel Oxidation Catalyst (C) placed upstream of the open-filter (F), according to a direction of the exhaust gas flow (EG),
- active regeneration means for controlling the active regeneration of the open-filter (F) as a function of an amount of particulate matter accumulated in the open-filter (F), wherein said active regeneration means comprise an estimator at least for estimating the amount of particulate matter accumulated in the open-filter (F);
said estimator comprising:
- first calculating means (B1,B2) for estimating a first amount/rate of particulate matter produced by the internal combustion engine (E) as a function of operating conditions of the internal combustion engine (E),
- second calculating means (B3) for estimating a second amount/rate of particulate matter regenerated by means of passive reactions in the open-filter (F);
- adjusting means (B5) for weighing the estimated first amount/rate with a coefficient (η) indicative of a retaining efficiency of the open-filter (F) so as to obtain a weighed third amount/rate of particulate matter;
- third calculating means for subtracting the estimated second amount/rate from the weighed third amount/rate;
**characterised in that** said coefficient (η) is a value that is variable in time as a function of actual operating conditions of the internal combustion engine (E), and said adjusting means (B5) comprise at least one relation to determine said variable value as a function of actual operating conditions of the internal combustion engine (E); wherein said actual operating conditions comprise:
- variable input values of a first parameter, indicative of an actual rotation speed of said internal combustion engine (E), and
- variable input values of a second parameter, indicative of an actual drive torque or an actual power of said internal combustion engine (E).

2. System according to claim 1, wherein said first parameter is defined by said rotation speed.

3. System according to claim 1 or 2, wherein said second parameter is defined by said drive torque or power.

4. System according to anyone of claims 1 to 3, wherein said relation is defined by a map or diagram comprising a plurality of mapped values for said variable value, each of the mapped values being correlated to a respective first value of said first parameter and to a respective second value of said second parameter.

5. System according to claim 4, wherein said adjusting means (B5) are configured to determine the variable value by interpolation or approximation of said mapped values when the actual input values do not correspond to the first and second values on the map or diagram.

6. System according to anyone of the previous claims, wherein a memory is provided to store said relation.

7. Method for controlling an active regeneration of a particulate open-filter (F) in an exhaust gas treatment system (ATS), the method comprising an estimation of an amount of particulate matter accumulated in the open-filter (F), said estimation comprising the steps of
- estimating a first amount/rate of particulate matter produced by the internal combustion engine (E) as a function of operating conditions of the internal combustion engine (E),
- estimating a second amount/rate of particulate matter regenerated by means of passive reactions in the open-filter (F);
- weighing the estimated first amount/rate with a coefficient (η) indicative of a retaining efficiency of the open-filter (F) so as to obtain a weighed third amount/rate of particulate matter;
- subtracting the second amount/rate from the weighed third amount/rate;
**characterised in that** said coefficient (η) is a variable value, and **characterised by** determining said variable value as a function of actual operating conditions of the internal combustion engine (E); wherein said operating conditions comprise at least:
- variable input values of a first parameter, indicative of an actual speed of said internal combustion engine (E), and
- variable input values of a second parameter, indicative of an actual drive torque or an actual power of said internal combustion engine (E).

8. Method according to claim 7, wherein said first parameter is defined by said speed.

9. Method according to claim 7 or 8, wherein said second parameter is defined by said drive torque or power.

10. Method according to anyone of the claims 7 to 9, wherein said coefficient (η) is determined by at least one relation stored in a memory.

11. Method according to claim 10, wherein said relation is defined by a map or diagram comprising a plurality of mapped values for said variable value, each of said mapped values being correlated to a first value of said first parameter and to a second value of said second parameter.

12. Method according to claim 11, wherein said mapped values are interpolated or approximated when the input values do not correspond to the first and second values provided in said map or diagram.

13. Computer program comprising program code means adapted to perform the method according to anyone of the claims 7 to 12, when such program is run on a computer unit and on an exhaust gas treatment system according to anyone of the claims 1 to 6.

14. Computer-readable means comprising a recorded program according to claim 13.

15. Internal combustion engine (E) comprising an exhaust gas treatment system (ATS) according to one of the claims from 1 to 6.

16. Vehicle comprising an internal combustion engine (E) according to claim 15.

## Patentansprüche

1. Abgasbehandlungssystem (ATS) für eine Brennkraftmaschine (E), wobei das System (ATS) Folgendes umfasst:
- einen offenen Partikelfilter (F),
- einen Dieseloxidationskatalysator (C), der in einer Richtung des Abgasdurchflusses (EG) stromaufwärts des offenen Filters (F) angeordnet ist, und
- aktive Regenerationsmittel zum Steuern der aktiven Regeneration des offenen Filters (F) als eine Funktion einer Menge von Schwebstoffen, die sich im offenen Filter (F) angesammelt haben, wobei die aktiven Regenerationsmittel einen Schätzer mindestens zum Schätzen der Menge von Schwebstoffen, die sich im offenen Filter (F) angesammelt haben, umfassen;
wobei der Schätzer Folgendes umfasst:
- erste Berechnungsmittel (B1, B2) zum Schätzen einer ersten Menge/Rate von Schwebstoffen, die durch die Brennkraftmaschine (E) erzeugt werden, als eine Funktion von Betriebsbedingungen der Brennkraftmaschine (E),
- zweite Berechnungsmittel (B3) zum Schätzen einer zweiten Menge/Rate von Schwebstoffen, die mittels passiver Reaktionen im offenen Filter (F) regeneriert werden;
- Anpassmittel (B5) zum Gewichten der geschätzten ersten Menge/Rate mit einem Koeffizienten (η), der einen Haltewirkungsgrad des offenen Filters (F) angibt, um eine gewichtete dritte Menge/Rate von Schwebstoffen zu erhalten; und
- dritte Berechnungsmittel zum Subtrahieren der geschätzten zweiten Menge/Rate von der gewichteten dritten Menge/Rate;
**dadurch gekennzeichnet, dass** der Koeffizient (η) ein Wert ist, der als eine Funktion von Ist-Betriebsbedingungen der Brennkraftmaschine (E) zeitlich veränderlich ist, und die Anpassmittel (B5) mindestens eine Beziehung umfassen, um den veränderlichen Wert als eine Funktion von Ist-Betriebsbedingungen der Brennkraftmaschine (E) zu bestimmen; wobei die Ist-Betriebsbedingungen Folgendes umfassen:
- veränderliche Eingangswerte eines ersten Parameters, die eine Ist-Drehzahl der Brennkraftmaschine (E) angeben, und
- veränderliche Eingangswerte eines zweiten Parameters, die ein Ist-Antriebsdrehmoment oder eine Ist-Leistung der Brennkraftmaschine (E) angeben.

2. System nach Anspruch 1, wobei der erste Parameter durch die Drehzahl definiert ist.

3. System nach Anspruch 1 oder 2, wobei der zweite Parameter durch das Antriebsdrehmoment oder die Leistung definiert ist.

4. System nach einem der Ansprüche 1 bis 3, wobei die Beziehung durch ein Kennfeld oder ein Diagramm definiert ist, das mehrere abgebildete Werte für den veränderlichen Wert umfasst, wobei jeder der abgebildeten Werte zu einem jeweiligen ersten Wert des ersten Parameters und zu einem jeweiligen zweiten Wert des zweiten Parameters in Beziehung gesetzt ist.

5. System nach Anspruch 4, wobei die Anpassmittel (B5) konfiguriert sind, den veränderlichen Wert durch Interpolation oder Näherung der abgebildeten Werte zu bestimmen, wenn die Ist-Eingangswerte nicht dem ersten und dem zweiten Wert in dem Kennfeld oder dem Diagramm entsprechen.

6. System nach einem der vorhergehenden Ansprüche, wobei ein Speicher bereitgestellt ist, um die Beziehung zu speichern.

7. Verfahren zum Steuern einer aktiven Regeneration eines offenen Partikelfilters (F) in einem Abgasbehandlungssystem (ATS), wobei das Verfahren eine Schätzung einer Menge von Schwebstoffen umfasst, die sich im offenen Filter (F) angesammelt haben, und die Schätzung die folgenden Schritte umfasst:
- Schätzen einer ersten Menge/Rate von Schwebstoffen, die durch die Brennkraftmaschine (E) erzeugt werden, als eine Funktion von Betriebsbedingungen der Brennkraftmaschine (E),
- Schätzen einer zweiten Menge/Rate von Schwebstoffen, die mittels passiver Reaktionen im offenen Filter (F) regeneriert werden;
- Gewichten der geschätzten ersten Menge/Rate mit einem Koeffizienten (η), der einen Haltewirkungsgrad des offenen Filters (F) angibt, um eine gewichtete dritte Menge/Rate von Schwebstoffen zu erhalten; und
- Subtrahieren der zweiten Menge/Rate von der gewichteten dritten Menge/Rate;
**dadurch gekennzeichnet, dass** der Koeffizient (η) ein veränderlicher Wert ist, und **gekennzeichnet durch** ein Bestimmen des veränderlichen Werts als eine Funktion von Ist-Betriebsbedingungen der Brennkraftmaschine (E); wobei die Betriebsbedingungen mindestens Folgendes umfassen:
- veränderliche Eingangswerte eines ersten Parameters, die eine Ist-Drehzahl der Brennkraftmaschine (E) angeben, und
- veränderliche Eingangswerte eines zweiten Parameters, die ein Ist-Antriebsdrehmoment oder eine Ist-Leistung der Brennkraftmaschine (E) angeben.

8. Verfahren nach Anspruch 7, wobei der erste Parameter durch die Drehzahl definiert ist.

9. Verfahren nach Anspruch 7 oder 8, wobei der zweite Parameter durch das Antriebsdrehmoment oder die Leistung definiert ist.

10. Verfahren nach einem der Ansprüche 7 bis 9, wobei der Koeffizient (η) durch mindestens eine Beziehung bestimmt wird, die in einem Speicher gespeichert ist.

11. Verfahren nach Anspruch 10, wobei die Beziehung durch ein Kennfeld oder ein Diagramm definiert ist, das mehrere abgebildete Werte für den veränderlichen Wert umfasst, wobei jeder der abgebildeten Werte zu einem ersten Wert des ersten Parameters und zu einem zweiten Wert des zweiten Parameters in Beziehung gesetzt ist.

12. Verfahren nach Anspruch 11, wobei die abgebildeten Werte interpoliert oder genähert werden, wenn die Eingangswerte nicht dem ersten und dem zweiten Wert entsprechen, der in dem Kennfeld oder dem Diagramm bereitgestellt ist.

13. Computerprogramm, das ein Programmcodemittel umfasst, das ausgelegt ist, das Verfahren nach einem der Ansprüche 7 bis 12 durchzuführen, wenn ein derartiges Programm in einer Computereinheit und in einem Abgasbehandlungssystem nach einem der Ansprüche 1 bis 6 ausgeführt wird.

14. Computerlesbare Mittel, die ein aufgezeichnetes Programm nach Anspruch 13 enthalten.

15. Brennkraftmaschine (E), die ein Abgasbehandlungssystem (ATS) nach einem der Ansprüche 1 bis 6 umfasst.

16. Fahrzeug, das eine Brennkraftmaschine (E) nach Anspruch 15 umfasst.

## Revendications

1. Système de traitement de gaz d'échappement (ATS) pour un moteur à combustion interne (E), le système (ATS) comprenant :
- un filtre à particules ouvert (F),
- un catalyseur d'oxydation diesel (C) placé en amont du filtre ouvert (F), selon une direction du flux de gaz d'échappement (EG),
- des moyens de régénération active pour commander la régénération active du filtre ouvert (F) en fonction d'une quantité de matières particulaires accumulées dans le filtre ouvert (F), dans lequel lesdits moyens de régénération active comprennent un estimateur au moins pour estimer la quantité de matières particulaires accumulées dans le filtre ouvert (F) ; ledit estimateur comprenant :
- des premiers moyens de calcul (B1, B2) pour estimer une première quantité/un premier taux de matières particulaires produites par le moteur à combustion interne (E) en fonction des conditions de fonctionnement du moteur à combustion interne (E),
- des deuxièmes moyens de calcul (B3) pour estimer une deuxième quantité/un deuxième taux de matières particulaires régénérées au moyen de réactions passives dans le filtre ouvert (F) ;
- des moyens d'ajustement (B5) pour peser la première quantité/le premier taux estimé avec un coefficient (η) indiquant une efficacité de rétention du filtre ouvert (F) de manière à obtenir une troisième quantité/un troisième taux pesé de matières particulaires ;
- des troisièmes moyens de calcul pour soustraire la deuxième quantité/le deuxième taux estimé de la troisième quantité/du troisième taux pesé ;
**caractérisé en ce que** ledit coefficient (η) est une valeur qui est variable dans le temps en fonction des conditions réelles de fonctionnement du moteur à combustion interne (E), et lesdits moyens d'ajustement (B5) comprennent au moins une relation pour déterminer ladite valeur variable en fonction des conditions réelles de fonctionnement du moteur à combustion interne (E) ; dans lequel lesdites conditions réelles de fonctionnement comprennent :
- des valeurs d'entrée variables d'un premier paramètre, indiquant une vitesse de rotation réelle dudit moteur à combustion interne (E), et
- des valeurs d'entrée variables d'un second paramètre, indiquant un couple d'entraînement réel ou d'une puissance réelle dudit moteur à combustion interne (E).

2. Système selon la revendication 1, dans lequel ledit premier paramètre est défini par ladite vitesse de rotation.

3. Système selon la revendication 1 ou 2, dans lequel ledit second paramètre est défini par ledit couple ou ladite puissance d'entraînement.

4. Système selon l'une quelconque des revendications 1 à 3, dans lequel ladite relation est définie par une représentation graphique ou un diagramme comprenant une pluralité de valeurs mappées pour ladite valeur variable, chacune des valeurs mappées étant corrélée à une première valeur respective dudit premier paramètre et à une seconde valeur respective dudit second paramètre.

5. Système selon la revendication 4, dans lequel lesdits moyens d'ajustement (B5) sont configurés pour déterminer la valeur variable par interpolation ou approximation desdites valeurs mappées lorsque les valeurs d'entrée réelles ne correspondent pas aux première et seconde valeurs sur la représentation graphique ou le diagramme.

6. Système selon l'une quelconque des revendications précédentes, dans lequel une mémoire est fournie pour stocker ladite relation.

7. Méthode de commande d'une régénération active d'un filtre à particules ouvert (F) dans un système de traitement de gaz d'échappement (ATS), la méthode comprenant une estimation d'une quantité de matières particulaires accumulées dans le filtre ouvert (F), ladite estimation comprenant les étapes de
- estimation d'une première quantité/un premier taux de matières particulaires produites par le moteur à combustion interne (E) en fonction des conditions de fonctionnement du moteur à combustion interne (E),
- estimation d'une deuxième quantité/un deuxième taux de matières particulaires régénérées au moyen de réactions passives dans le filtre ouvert (F) ;
- pesée de la première quantité/du deuxième taux estimé avec un coefficient (η) indiquant une efficacité de rétention du filtre ouvert (F) de manière à obtenir une troisième quantité/un troisième taux pesé de matières particulaires ;
- soustraction de la deuxième quantité/du deuxième taux de la troisième quantité/du troisième taux pesé ;
**caractérisée en ce que** ledit coefficient (η) est une valeur variable, et **caractérisée par** la détermination de ladite valeur variable en fonction des conditions réelles de fonctionnement du moteur à combustion interne (E) ; dans laquelle lesdites conditions de fonctionnement comprennent au moins :
- des valeurs d'entrée variables d'un premier paramètre, indiquant une vitesse réelle dudit moteur à combustion interne (E), et
- des valeurs d'entrée variables d'un second paramètre, indiquant un couple d'entraînement réel ou une puissance réelle dudit moteur à combustion interne (E).

8. Méthode selon la revendication 7, dans laquelle ledit premier paramètre est défini par ladite vitesse.

9. Méthode selon la revendication 7 ou 8, dans laquelle ledit second paramètre est défini par ledit couple ou ladite puissance d'entraînement.

10. Méthode selon l'une quelconque des revendications 7 à 9, dans laquelle ledit coefficient (η) est déterminé par au moins une relation stockée dans une mémoire.

11. Méthode selon la revendication 10, dans laquelle ladite relation est définie par une représentation graphique ou un diagramme comprenant une pluralité de valeurs mappées pour ladite valeur variable, chacune desdites valeurs mappées étant corrélée à une première valeur dudit premier paramètre et à une seconde valeur dudit second paramètre.

12. Méthode selon la revendication 11, dans laquelle lesdites valeurs mappées sont interpolées ou approximées lorsque les valeurs d'entrée ne correspondent pas aux première et seconde valeurs fournies dans ladite représentation graphique ou ledit diagramme.

13. Programme informatique comprenant des moyens de code de programme conçus pour exécuter la méthode selon l'une quelconque des revendications 7 à 12, lorsque ce programme est exécuté sur une unité informatique et sur un système de traitement de gaz d'échappement selon l'une quelconque des revendications 1 à 6.

14. Moyens lisibles par ordinateur comprenant un programme enregistré selon la revendication 13.

15. Moteur à combustion interne (E) comprenant un système de traitement de gaz d'échappement (ATS) selon l'une des revendications 1 à 6.

16. Véhicule comprenant un moteur à combustion interne (E) selon la revendication 15.
